# EUROPÄISCHE PATENTANMELDUNG

(11) **EP 1 610 302 A1**
(43) Veröffentlichungstag der Anmeldung: **28.12.2005**
(21) Anmeldenummer: 05007697.5
(22) Anmeldetag: 08.04.2005
(51) Int. Cl.: G10L 15/26, G10L 17/00, B60R 16/02

(54) **Verfahren zur sprecherabhängigen Spracherkennung in einem Kraftfahrzeug**

(30) Priorität: 22.06.2004 DE 102004030054
(71) Anmelder: Bayerische Motoren Werke Aktiengesellschaft, 80809 München (DE)
(72) Erfinder: Weidner, Marcus, 82362 Weilheim (DE); Baur, Richard, 85276 Pfaffenhofen (DE)

(57) **Zusammenfassung**

In einem Verfahren zur sprecherabhängigen Spracherkennung durch ein für eine begrenzte Anzahl von Sprechern vorgesehenes Spracherkennungssystem in einem Kraftfahrzeug wird die Identität des Fahrers von einem System zur Fahrerauthentifizierung festgestellt und an das Spracherkennungssystem weitergegeben.

## Beschreibung

Die vorliegende Erfindung betrifft ein Verfahren zur sprecherabhängigen Spracherkennung durch ein für eine begrenzte Anzahl von Sprechern vorgesehenes Spracherkennungssystem in einem Kraftfahrzeug.

Spracherkennungssysteme, die auf die Nutzung durch mehr als einen Sprecher ausgelegt sind, lassen sich unterscheiden in sprecherabhängige Spracherkennungssysteme, sprecherunabhängige Spracherkennungssysteme und Mischformen der beiden erstgenannten Formen.

Die Funktion sprecherabhängiger Spracherkennungssysteme basiert auf dem Vergleich eines aufgenommenen Sprachkommandos mit codiert oder uncodiert abgespeicherten Sprachmustern eines oder mehrerer Sprecher. Die Sprachmuster unterschiedlicher Sprecher weisen in der Regel sehr unterschiedliche Charakteristika auf, weshalb meist ein Sprachmuster je Sprecher und möglichem Sprachkommando benötigt wird. Je größer die Anzahl der Personen ist, die ein sprecherabhängiges Spracherkennungssystem benutzen können sollen, umso größer wird die Anzahl der abzuspeichernden Sprachmuster. Dadurch steigt sowohl der zum Abspeichern der Sprachmuster benötigte Speicherplatz als auch die Rechenleistung, die zur Erkennung eines Sprachkommandos durch Vergleich mit allen Sprachmustern benötigt wird. Zudem sinkt bei einem sprecherabhängigen Spracherkennungssystem mit zunehmender Anzahl an abgelegten Sprachkommandos wegen zunehmender Ähnlichkeiten der Sprachmuster die Zuverlässigkeit des Systems, d. h. die Wahrscheinlichkeit der korrekten Erkennung eines eingegebenen Sprachkommandos.

Es ist bekannt, dass der Speicherplatzbedarf und die benötigte Rechenleistung eines sprecherabhängigen Spracherkennungssystems, welches auf die Nutzung durch mehr als einen Sprecher ausgelegt ist, reduziert werden können und die Zuverlässigkeit des Systems erhöht werden kann, wenn der aktuelle Sprecher bekannt ist und/oder als Entscheidungsbasis des Systems nur Sprachmuster des aktuellen Sprechers zur Verfügung stehen.

Beispielsweise ist aus der US 4,797,924 ein System zur sprecherabängigen Spracherkennung in einem Kraftfahrzeug bekannt, welches es einem Benutzer erlaubt, verschiedene Funktionen des Kraftfahrzeugs durch Sprachkommandos zu steuern. DasDas Spracherkennungssystem empfängt von einem austauschbaren Speichermodul ein Benutzerprofil, welches als Entscheidungsbasis der Spracherkennung dient bzw. zu dieser beiträgt. Durch die Verwendung verschiedener Speichermodule lassen sich verschiedene Nutzer berücksichtigen. Nachteilig an diesem System ist, dass der Komfort eines Fahrzeugnutzers dadurch eingeschränkt wird, dass er dafür Sorge zu tragen hat, dass die Daten des Speichermoduls dem Spracherkennungssystem zur Verfügung stehen. Bei einem mobilen Speichermodul etwa muss das Speichermodul entweder im Fahrzeug belassen oder ins Fahrzeug mitgebracht und ggf. an das System angeschlossen werden. Befinden sich die Speichermodule mehrerer Nutzer im Fahrzeug, muss das Speichermodul des aktuellen Fahrers an das System zur Spracherkennung angeschlossen werden. Zudem kann das System grundsätzlich nicht durch mehrere gleichzeitig im Kraftfahrzeug befindliche Sprecher genutzt werden.

Aus der DE 100 23 780 A1 ist ein System zur sprecherabhängigen Spracherkennung für die Nutzung durch mehrere Sprecher in einem Kraftfahrzeug bekannt. In dem System sind für verschiedene Sprecher verschiedene Parameterblöcke (Sprachprofile) abgelegt, die jeweils einem Eingabeelement zuordenbar sind. Zur Aktivierung des Spracherkennungssystems betätigt ein Sprecher vor oder während der Abgabe eines Sprachkommandos das Eingabeelement, dem sein Parameterblock vor Fahrtantritt zugeordnet wurde. Insbesondere für den Fahrer des Kraftfahrzeugs besteht bei einem solchen Verfahren der Nachteil, dass die Aktivierung des Systems eine Betätigung eines Eingabeelements erfordert, durch welche die Aufmerksamkeit des Fahrers vom Fahrgeschehen abgelenkt wird. Zudem werden in der DE 100 23 780 A1 keine Angaben gemacht, wie die Identität der Fahrzeuginsassen, insbesondere des Fahrers, festgestellt wird.

Aufgabe der Erfindung ist es, ein Verfahren zur sprecherabhängigen Spracherkennung in einem Kraftfahrzeug zu schaffen, in welchem mit geringem konstruktivem Aufwand eine Zuordnung zwischen dem Fahrer des Kraftfahrzeugs und den für diesen Fahrer bereitzustellenden Sprachmustern hergestellt wird.

Gelöst wird diese Aufgabe durch ein Verfahren zur sprecherabhängigen Spracherkennung, in welchem die Identität des Fahrers von einem System zur Fahrerauthentifizierung festgestellt und über ein Signal an die Spracherkennungseinheit weitergegeben wird.

Die Bestimmung der Identität des Fahrers erfolgt erfindungsgemäß durch die vorteilhafte Nutzung eines, in vielen Kraftfahrzeugen moderner Bauart bereits enthaltenen, Systems zur Fahrerauthentifizierung. Die Identität des Fahrers wird in solchen Systemen entweder durch die Detektion eines einem bestimmten Fahrer zugeordneten Authentifizierungsmittels (z. B. codierter Schlüssel oder Schlüsselanhänger) oder durch die Erfassung biometrischer Größen (z. B. Fingerabdruck) des Fahrers festgestellt. In den meisten Ausführungsformen solcher Systeme wird an einer Datenschnittstelle ein Signal zur Verfügung gestellt, welches die Identität des Fahrers anzeigt. Dieses Signal kann ohne wesentlichen technischen Mehraufwand direkt oder über einen Datenbus an das Spracherkennungssystem weitergegeben werden.

Die auf diese Weise erreichbare Kenntnis der Identität des Fahrers kann gemäß verschiedener Weiterbildungen der Erfindung auf unterschiedliche Weise vorteilhaft genutzt werden.

Der wichtigste Vorteil einer ersten Weiterbildung der Erfindung besteht darin, dass die Entscheidungsbasis des Spracherkennungssystems durch die Kenntnis der Identität des Fahrers erheblich eingeschränkt werden kann, während zur Identifikation des Fahrers weder eine dedizierte Aktion des Fahrers erforderlich ist noch ein wesentlicher dedizierter konstruktiver Aufwand getrieben werden muss. Durch die Einschränkung der Entscheidungsbasis wird die zum Vergleichen eines eingegebenen Sprachkommandos mit allen relevanten Sprachmustern benötigte Rechenleistung verringert und die Zuverlässigkeit des Spracherkennungssystems erhöht. Zudem müssen lediglich die in der aktuellen Entscheidungsbasis enthaltenen Sprachmuster in einem Speichermedium mit schnellen Zugriffszeiten abgelegt werden, während alle anderen dem System bekannten Sprachmuster in einem Speichermedium mit langsamen Zugriffszeiten abgelegt werden können.

Die größte Einsparung an Rechenleistung kann erzielt werden, wenn die Entscheidungsbasis lediglich Sprachmuster des Sprechers enthält. Alternativ kann gemäß einer besonders vorteilhaften Ausführungsform der oben genannten ersten Weiterbildung der Erfindung die Entscheidungsbasis des Spracherkennungssystems so eingeschränkt werden, dass nur solche Sprachmuster, die ausgewählten sicherheitsrelevanten Sprachkommandos zugeordnet sind, lediglich für den Fahrer enthalten sind. Die Sprachmuster zu allen anderen Sprachkommandos sind für alle möglichen Sprecher bzw., falls diese bekannt sind, für alle Fahrzeuginsassen abgelegt. Auf diese Weise kann erreicht werden, dass nicht sicherheitsrelevante Funktionen durch alle Fahrzeuginsassen auslösbar sind. Gegenüber bekannten sprecherabhängigen Spracherkennungssystemen für mehrere Sprecher wird - neben einer Einsparung an Rechenleistung - jedoch erreicht, dass die Sicherheit der Fahrzeuginsassen erhöht wird, da ein Auslösen der betreffenden sicherheitsrelevanten Funktionen nur durch den Fahrer möglich ist.

Gemäß einer zweiten Weiterbildung der Erfindung kann die Kenntnis der Identität des Fahrers noch auf eine weitere Art und Weise vorteilhaft genutzt werden, um das Auslösen sicherheitsrelevanter Funktionen eines Kraftfahrzeugs nur dem Fahrer zu gestatten. Hierzu wird zusätzlich zur Identität des Fahrers die Identität des Sprechers bestimmt und mit der Identität des Fahrers verglichen. In einem Verfahren gemäß dieser zweiten Weiterbildung werden zunächst Sprachmuster aller Sprecher mit einem aufgenommenen Sprachkommando verglichen. Anschließend werden bestimmte Sprachkommandos, ggf. auch sämtliche Sprachkommandos, allerdings nur dann ausgeführt, wenn Fahrer und Sprecher übereinstimmen. Die Identität des Sprechers ist dabei entweder direkt dem Sprachmuster zugeordnet, welches als das dem Sprachkommando ähnlichste ausgemacht wurde, oder ein Spracherkennungssystem gemäß dem erfinderischen Hauptgedanken wird mit bekannten Elementen zur Identifikation eines Sprechers kombiniert.

Beide genannten Weiterbildungen des erfinderischen Gedankens können, wie oben beschrieben, eigenständig oder kombiniert angewendet werden.

An Hand der beigefügten Zeichnungen wird die Erfindung im Folgenden weiter erläutert. Dabei zeigen
- Fig. 1: ein Prinzipbild des Aufbaus und der Verschaltung eines erfindungsgemäßen Spracherkennungssystems,
- Fig. 2: ein Struktogramm eines Verfahrens zur Spracherkennung gemäß einer ersten oder zweiten Ausführungsform der Erfindung,
- Fig. 3: ein Struktogramm eines Verfahrens zur Spracherkennung gemäß einer dritten Ausführungsform der Erfindung,
- Fig. 4: ein Struktogramm eines Verfahrens zur Spracherkennung gemäß einer vierten Ausführungsform der Erfindung.

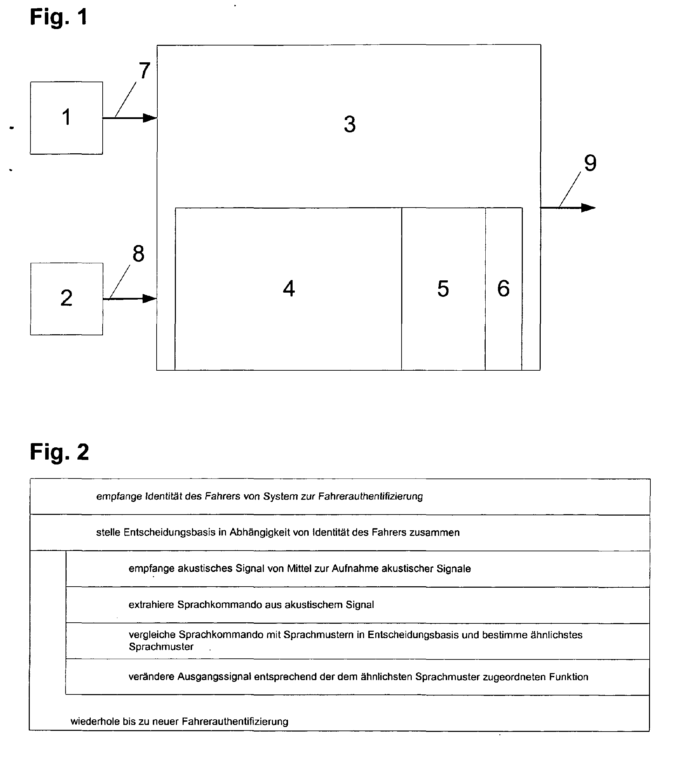

Fig. 1 zeigt schematisch den Aufbau und die Verschaltung eines erfindungsgemäßen Spracherkennungssystems. Das System besitzt verschiedene Signaleingänge. Zum einen wird von einem Mittel 1 zur Aufnahme akustischer Signale ein akustisches Signal 7 aufgenommen. Zum anderen wird von einem System zur Fahrerauthentifizierung 2 ein Signal 8 empfangen, welches dem Spracherkennungssystem 3 die Identität des Fahrers anzeigt. Das akustische Signal 7 wird im Spracherkennungssystem 3 verarbeitet. Dabei wird ein aufgenommenes Sprachkommando in codierter oder uncodierter Form mit abgelegten Sprachmustern verglichen. Das aufgenommene Sprachkommando kann dazu gegebenenfalls temporär in einem Kommandospeicher 6 abgelegt werden.

Der Vergleich wird durchgeführt mit allen in einer Entscheidungsbasis 5 abgelegten Sprachmustern. Die Entscheidungsbasis 5 beinhaltet dabei eine Teilmenge der in einem Sprachmusterspeicher 4 abgelegten Sprachmuster. Als technische Ausführungsformen der Organisation von Sprachmusterspeicher 4 und Entscheidungsbasis 5 bieten sich zwei Varianten an. Entweder sind in der Entscheidungsbasis 5 Kopien einer Teilmenge der im Sprachmusterspeicher 4 abgelegten Sprachmuster abgespeichert. Diese Variante ist insbesondere dann vorteilhaft, wenn vom Prozessor des Spracherkennungssystems 3 schneller auf die Entscheidungsbasis 5 als auf den Sprachmusterspeicher 4 zugegriffen werden kann. Alternativ kann die Entscheidungsbasis 5 Verknüpfungen zu ausgewählten Sprachmustern enthalten, die physikalisch lediglich im Sprachmusterspeicher 4 abgelegt sind. Diese Variante zeichnet sich durch einen geringeren benötigten Gesamtspeicherplatz aus.

Als Ergebnis des Vergleichs wird - bei weitgehender Übereinstimmung des Sprachkommandos mit einem Sprachmuster - ein Ausgangssignal 9 des Spracherkennungssystems 3 so verändert, dass dadurch eine dem Sprachmuster zugeordnete Funktion des Kraftfahrzeugs aufgerufen wird.

Die Kenntnis der Identität des Fahrers (Signal 8) kann in dem Spracherkennungssystem 3 nun gemäß unterschiedlicher Weiterbildungen des erfinderischen Gedankens auf unterschiedliche Weise genutzt werden. Zum einen kann in Abhängigkeit von der Identität des Fahrers die Anzahl der relevanten Sprachmuster verringert werden. Zum anderen kann in einer zusätzlich eingeführten Sicherheitsabfrage ein Abgleich mit der Identität des Sprechers erfolgen, sofern diese bekannt ist. Im Folgenden werden verschiedene Ausführungsformen des erfinderischen Gedankens beschrieben, in welchen beide genannten Merkmale für sich oder in Kombination miteinander vorteilhaft angewendet werden.

In einer ersten einfachsten Ausführungsform werden in Abhängigkeit von Signal 8 lediglich sämtliche Sprachmuster des Fahrers aus dem Sprachmusterspeicher 4 in die Entscheidungsbasis 5 geladen. Die Anzahl der in der Entscheidungsbasis 5 abgelegten Sprachmuster ist erheblich kleiner als die Anzahl der im Sprachmusterspeicher 4 abgelegten Sprachmuster. Die zur Erkennung von Sprachkommandos des Fahrers erforderliche Speicherkapazität und Rechenleistung kann somit verringert, die Zuverlässigkeit des Spracherkennungssystems erhöht werden. Anschließend wird in dieser Ausführungsform der Erfindung ohne eine Prüfung der Identität des Sprechers die Funktion aufgerufen, die dem Sprachmuster zugeordnet ist, das die größte Ähnlichkeit mit dem Sprachkommando besitzt.

Gemäß einer zweiten Ausführungsform der Erfindung enthält die Entscheidungsbasis 5 ebenfalls nur eine Teilmenge der Sprachmuster im Sprachmusterspeicher 4.

Allerdings wird sie nunmehr nicht ausschließlich auf Sprachkommandos des Fahrers begrenzt. Statt dessen sind in der Entscheidungsbasis 5 nur die Sprachmuster ausgewählter sicherheitsrelevanter Sprachkommandos (z. B. Verstellung des Fahrersitzes) lediglich für den Fahrer enthalten. Die entsprechenden Funktionen können somit nur durch den Fahrer ausgelöst werden. Funktionen hingegen, denen kein Sicherheitsrisiko beigemessen wird (z. B. Aktivieren eines Grafikdisplays im Fond) sollen auch für andere Fahrzeuginsassen ausgelöst werden können. Die Sprachkommandos, die solchen Funktionen zugeordnet sind, sind daher für alle möglichen Sprecher in der Entscheidungsbasis 5 enthalten. Die Menge sicherheitsrelevanter Funktionen kann dabei prinzipiell für ein Fahrzeug vorgegeben oder in einem Konfigurationsmodus durch einen Benutzer variierbar sein. Auch gemäß dieser zweiten Ausführungsform der Erfindung wird anschließend ohne eine Prüfung der Identität des Sprechers die Funktion aufgerufen, die dem Sprachmuster zugeordnet ist, welches als das dem Sprachkommando ähnlichste bestimmt wurde.

Fig. 2 zeigt ein Struktogramm eines Verfahrens zur Spracherkennung gemäß der oben beschriebenen ersten oder zweiten Ausführungsform der Erfindung.

Weitere vorteilhafte Weiterbildungen des erfinderischen Gedankens beruhen auf der Einführung einer Sicherheitsabfrage, in welcher vor der Ausführung eines Sprachkommandos geprüft wird, ob der Sprecher zum Auslösen der entsprechenden Funktion berechtigt ist. Zur Durchführung einer solchen Abfrage ist eine Bestimmung der Identität des Sprechers erforderlich. Diese kann problemlos erfolgen, wenn den in der Entscheidungsbasis 5 abgelegten Sprachmustern die Identität des jeweiligen Sprechers eindeutig zuzuordnen ist. In diesem Fall ist durch die Bestimmung des dem Sprachkommando ähnlichsten Sprachmusters gleichzeitig auch dessen Sprecher bekannt. Eine noch höhere Zuverlässigkeit der Bestimmung der Identität des Sprechers kann gegebenenfalls erreicht werden, wenn diese Zuordnung kombiniert wird mit weiteren Maßnahmen zur Sprechererkennung oder durch solche Maßnahmen ersetzt wird. Hierzu sind verschiedene aus dem Stand der Technik bekannte Maßnahmen wie etwa eine Spektralanalyse des aufgenommenen Sprachkommandos oder die Betätigung eines dem Sprecher zugeordneten Eingabeelements denkbar.

Bei bekannter Identität des Sprechers lassen sich entsprechend der oben beschriebenen ersten und zweiten Ausführungsform der Erfindung eine dritte und vierte Ausführungsform der Erfindung ableiten. Im Unterschied zur ersten und zweiten Ausführungsform werden dabei alle im Sprachmusterspeicher 4 enthaltenen Sprachmuster als Entscheidungsbasis 5 genutzt. Ein aufgenommenes Sprachkommando wird somit mit allen vorliegenden Sprachmustern verglichen. Bevor jedoch das Ausgangssignal 9 des Spracherkennungssystems 3 verändert wird, findet eine Kontrolle statt, ob die Identität des Sprechers mit der des Fahrers übereinstimmt. Gemäß einer dritten Ausführungsform der Erfindung werden Sprachkommandos generell nur dann ausgeführt, wenn die Identitäten von Sprecher und Fahrer übereinstimmen. Gemäß einer vierten Ausführungsform der Erfindung wird nur mit sicherheitsrelevanten Sprachkommandos so verfahren.

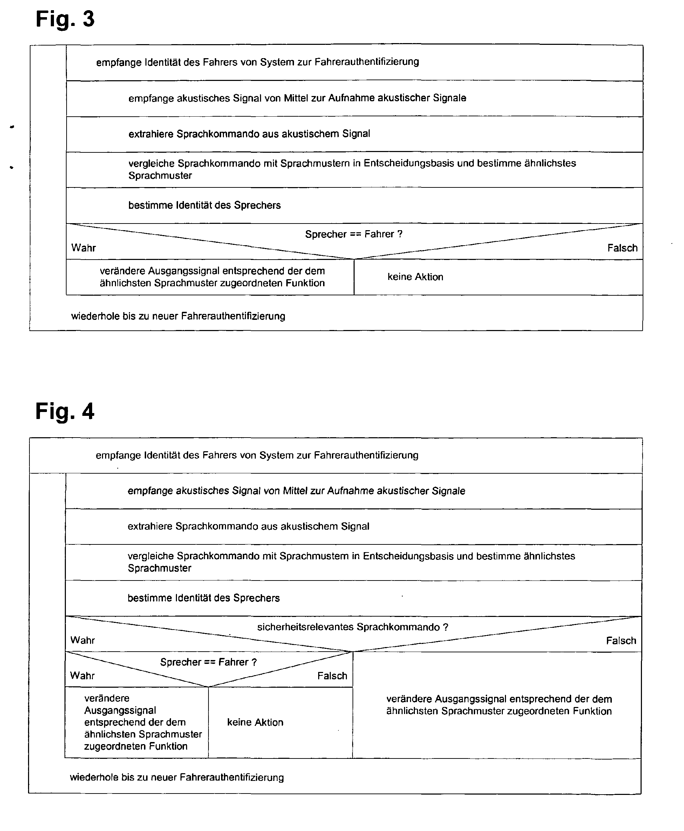

Fig. 3 zeigt ein Struktogramm eines Verfahrens zur Spracherkennung gemäß der oben beschriebenen dritten Ausführungsform der Erfindung, Fig. 4 ein Struktogramm eines Verfahrens gemäß der vierten Ausführungsform.

Wie bereits an früherer Stelle erwähnt, ist die Anwendbarkeit des erfinderischen Gedankens nicht auf die beschriebenen Ausführungsbeispiele begrenzt, sondern schließt auch beliebige weitere Kombinationen der beschriebenen Verfahrensmerkmale ein.

## Patentansprüche

1. Verfahren zur sprecherabhängigen Spracherkennung durch ein für eine begrenzte Anzahl von Sprechern vorgesehenes Spracherkennungssystem in einem Kraftfahrzeug, **dadurch gekennzeichnet, dass** die Identität des Fahrers von einem System zur Fahrerauthentifizierung festgestellt und an das Spracherkennungssystem weitergegeben wird.

2. Verfahren nach Anspruch 1, **dadurch gekennzeichnet, dass** in dem Verfahren eine Entscheidungsbasis verwendet wird, welche als Folge der Kenntnis der Identität des Fahrers verkleinert wird.

3. Verfahren nach Anspruch 1 oder 2, **dadurch gekennzeichnet, dass** die Entscheidungsbasis des Verfahrens als Folge der Kenntnis der Identität des Fahrers ausschließlich Sprachmuster des Fahrers enthält.

4. Verfahren nach einem der Ansprüche 1 oder 2, **dadurch gekennzeichnet, dass**
die Ausführung bestimmter Sprachkommandos von der Übereinstimmung der Identitäten von Fahrer und Sprecher abhängt.

5. Verfahren nach einem der Ansprüche 1 oder 2, **dadurch gekennzeichnet, dass**
die Ausführung aller Sprachkommandos von der Übereinstimmung der Identitäten von Fahrer und Sprecher abhängt.

6. Verfahren nach einem der Ansprüche 1, 2, 4 oder 5, **dadurch gekennzeichnet, dass** die Identität des Sprechers anhand der Zuordnung zu einem Sprachmuster festgestellt wird.
